# EUROPEAN PATENT APPLICATION

(11) **EP 3 185 135 A1**
(43) Date of publication of application: **28.06.2017**
(21) Application number: 15307089.1
(22) Date of filing: 21.12.2015
(51) Int. Cl.: G06F 17/28, G06F 17/30

(54) **METHOD FOR GENERATING A SYNOPSIS OF AN AUDIO VISUAL CONTENT AND APPARATUS PERFORMING THE SAME**

(71) Applicant: Thomson Licensing, 92130 Issy-les-Moulineaux (FR)
(72) Inventor: Brocke, Jens, 30880 Laatzen (DE); Li, Hui, 30539 Hannover (DE); Kubsch, Stefan, 31559 Hohnhorst (DE); Weber, Michael, 30559 Hannover (DE); Glaeser, Frank, 30449 Hannover (DE); Pieper, Michael, 30659 Hannover (DE)
(74) Representative: Huchet, Anne

(57) **Abstract**

A method, a computer readable storage medium and an apparatus (40) for generating a synopsis of a segment of an audiovisual content are described. Semantic metadata of a segment of audiovisual content is received, which is then analysed to identify semantic concepts and relations among the semantic concepts in the semantic metadata. Each semantic concept is associated with one concept type and has properties and instances. The semantic concepts and the relations among them describe a semantic description. A synopsis of the segment of the audiovisual content is generated by transforming the semantic description into a syntactically correct synopsis.

## Description

### TECHNICAL FIELD

The present disclosure relates to a method and an apparatus for generating a synopsis of a segment of an audiovisual content, particularly using an ontology-style semantic annotation scheme. In addition, a computer readable medium suitable for such a method and an apparatus is also disclosed.

### BACKGROUND

With the abundance of available audiovisual (AV) content that is produced at a seemingly ever-increasing rate, both by professionals and consumers, metadata which describes the AV content becomes more and more important in order to properly manage, archive, search for and recommend the AV content. Such metadata can, for example, include technical data (e.g., duration, format, encoding, storage media, etc.), creation/production data (e.g., title, genre, purpose, cast, producer, crew, production time/location, etc.), distribution-related data (e.g., languages, subtitles/captions, regional and access restrictions, age/violence/swear ratings, pricing, etc.), structural data (e.g., temporal segmentation in chapters, scenes and shots, etc.), and data describing the semantic meanings (e.g., synopsis of the narrative/topics and/or related keywords, etc.).

Among others, semantic metadata occurs in various complexities and granularities. A rather simple but expressive semantic annotation is a free-text synopsis description, which is often used for full instances of AV content such as being provided on the back of packaged media or associated with digitally retrievable content. However, the free-text synopsis is not commonly used for segments of AV content. On the other hand, free-text keywords are used to annotate both full instances of AV content and their segments, but the free-text keywords are less expressive than the synopsis descriptions. For both techniques, an obvious drawback of free-text annotation is that computers require complex Natural Language Processing (NLP) tools to understand and operate on such synopsis description and to cope with ambiguities of such keywords (e.g. synonyms, homonyms, typos, etc.).

One common approach to avoid the ambiguities of free-text semantic keywords is to restrict the permitted keywords to a predefined set of clearly defined terms, which can be called "controlled vocabulary". There may be several examples of such vocabularies, like one for each class of concepts (e.g., people, creatures, objects, events, etc.). The controlled vocabulary can mitigate problems with homonyms, for example, "bank" can represent a piece of furniture, a financial institution or a bank building. In addition, the terms of such vocabularies are often organized in a hierarchy of super- and sub-concepts to build a corresponding taxonomy. This allows the possibility to annotate a specific concept with a most suitable super-concept when the specific concept is not part of the taxonomy or when it is hard to choose a sub-concept.

Nevertheless, a description using the semantic annotations from concept taxonomies can lack important aspects that describe essential information about the description. For example, for a disco scene annotated with person concepts of "man", "woman" and "barkeeper", activity concepts of "talk", "drink", "stand" and "dance", and object concepts of "bar", "dance floor" and "beer", it is unclear which person and object participate in which events. Where and in which temporal relation to each other do the events happen? Are there one or many instances of each concept?

Therefore, more sophisticated semantic annotation schemes, which also define description means for relations (participant, property, locative, temporal, whole/part, etc.) between the concepts, are desired and required. Such a formalized definition of concept types, properties, instances and relations can be called an ontology defining the same.

One example of a semantic annotation scheme that partly uses an ontology-style approach are the semantic description tools of MPEG-7, which include a base set of semantic concept classes (e.g., Object, Event, SemanticState/Place/Time, etc.) and a set of semantic relations (agent, patient, instrument, state, location, time, etc.). Semantic concepts may also be linked by general, spatial, or temporal relations defined by MPEG-7. A set of semantic concepts and their relations can represent an expressive semantic description, and such a description, or some parts of it, or even individual concepts described by it can be linked to the respective segments of AV content being described. For example, a shot showing a character "Tom" eating an apple may be described by AgentObject "Tom" *agentOf* Event "eat" *patient* Object "apple".

Annotators nowadays might use some semi-automatic procedures to perform or support parts of the annotation processes, e.g., scene/shot detection, object/face/motion detection and tracking, optical character recognition (OCR), speech-to-text processing, sound detection, NLP processing of subtitles/captions, temporal aligning and NLP processing of content scripts, etc. However, an even more proper and finer annotation of AV content with detailed and fine-grained semantic descriptions is still desired, particularly to be generated without human participation such that the annotation time and cost can be reduced.

One application of a textual synopsis of a segment of AV content is used for video summarization. To create a static video summary, an instance of video content is fragmented into suitable temporal sections, typically scenes or shots. For each section, one or more separate video frames illustrating the key content of the section are extracted, depending on the duration of the section, whether or not its key content changes, and the desired granularity of segmentation. In case of multiple key frames, the section is further subdivided into temporal segments, each of which is associated with one of the frames. Alternatively, each section can be simply a segment on its own.

In a simple static video summary application, the key frames are displayed in a compact form according to their temporal sequence, typically in some kind of browsing interface enabling quick skimming of the frames and often playback of a video segment on selection of an associated frame. More sophisticated applications may cluster the segments according to the similarity of their content and present a hierarchical interface to the segments. For example, a hierarchical static video summary of a news program may show a single frame representing all frames of the program on a top level, a set of frames each representing a specific cluster of similar segments (e.g., scenes/shots showing news presentations by an anchor, story videos, interviews with field reporters, etc.) on a middle level, and frames representing individual segments assigned to an associated cluster on a bottom level. The latter frames are typically shown in temporal sequence within their respective cluster.

Some static video summary applications can complement the presentation of a key frame representing an individual video segment with a typically short textual description of the content of the segment, e.g., a synopsis and/or keywords. This enables a user to get more information about a segment than an associated key frame can illustrate, and thus eases a user's evaluation of the segment before actually watching it. Currently, such descriptions are typically generated by some semi-automatic annotation procedures as described above, thus normally with at least some human participation. The final quality of the descriptions strongly depends on the general quality of the procedures, their suitability for a given video content, the availability and quality of supplementary material besides the content itself, time and budget spent on the the human participation, etc. For example, processing of the content's dialog, visible text and subtitles/captions normally works well for news, documentaries and presentations, because the content's dialog, visible text and subtitles/captions describe the semantic meaning depicted by the corresponding content well. On the other hand, processing of the content's dialog, visible text and subtitles/captions normally works less well for fictional content, because the content's dialog, visible text and subtitles/captions describe the semantic meaning depicted by the corresponding content less well. Also, processing of content scripts normally works better when the script matches more with the final-cut version of the content.

One application that can benefit from a synopsis of a segment of AV content as synthesized spoken audio is audio description of AV content for visually impaired consumers. Such descriptions are usually provided as a separate audio track in which a speaker describes, mostly during the pauses of the main audio part of the content, e.g., dialog, significant sounds, etc., what is visible or happens in the video part of the content, e.g., key persons, objects, locations, events, activities, etc. Audio descriptions are normally authored and spoken by trained professionals, making their production quite expensive. As a result, only a fraction of the available AV content, even of the professionally produced portion, can be provided with audio descriptions.

### SUMMARY

Therefore, it is an object of the present principles to generate and provide an improved synopsis for segments of AV content, particularly using an ontology-style semantic annotation scheme and using linguistic techniques for semantic to syntax linking. The segments of AV content are associated with detailed and fine-grained semantic metadata annotations. The synopsis can be created in various kinds of languages and representations such as textual, synthesized spoken audio, etc. Furthermore, synopses can be created for a single, several, or even all segments of an instance of AV content, and synopses of multiple segments may be combined to create more comprehensive descriptions of arbitrary parts of the content.

An ontology-style semantic annotation scheme supporting the description of individual states, events, processes and activities related with their participants and context information can be used to create improved semantic description, of which the expressivity can more or less resemble the same of a free-text description, depending on the specific description features of the scheme. Such a semantic description can be used to produce a more detailed textual synopsis of an AV content segment, by applying linguistic techniques for transforming a semantic representation into an equivalent and syntactically correct textual representation in a specific language. For example, a shot showing a character "Tom" eating an apple may be described as an English clause "Tom eats an apple". The language production system may also provide other kinds of output, like a synthesized spoken audio representation (either directly or via automatic text-to-speech techniques), and/or output in various languages (either directly or via automatic translation techniques).

For the creation of the synopsis of a segment of AV content according to the present principles, the sematic annotation is provided according to an ontology-style semantic annotation scheme. This ontology-style semantic annotation scheme supports the description of concept types (typically from a rich set of concept taxonomies for persons, creatures, objects, locations, times, states, events, processes, activities, etc.), their properties and instances, and their relations to each other (participant, property, state, locative, temporal, etc.). The participant relations are capable of describing which concepts participate in which events, processes and/or activities in which way. The resulting semantic description is at least temporally related to the segments of AV content in which the described concepts occur or happen.

Such segments of AV content can be scenes or shots of a film or a video content, in which case concepts like events, processes and activities within a description should at least be temporally related to each other to facilitate the creation of the synopses with a proper temporal sequence of these concepts. For a more precise temporal mapping, fine-grained descriptions or even individual concepts may also be linked with exactly the segments of the content in which they occur or happen, in addition to or independent of the segments of the film or video. Such a mapping enables assembly of semantic descriptions belonging to an arbitrary segment of the content and hence creation of a synopsis for this arbitrary segment instead of pre-defined segments only.

Furthermore, the ontology-style semantic annotation scheme includes means for indication of the importance of parts of semantic descriptions or even individual concepts with respect to the narrative or topics of the content, e.g., multi-value levels or percentage values. This is to facilitate the selection of the most relevant annotation in case that the amount of annotation provided for a segment exceeds the amount usable for a specific application, e.g., if fine-grained annotations should be transformed into a short textual synopsis of a long scene containing lots of events/processes/activities with related participants and context information.

The semantic annotation is preferably provided by a creator of an instance of AV content or by some service contractor assigned by the creator. These people normally have better tools (e.g., good quality and suitability for a given content type, etc.), skills (e.g., tool usage, remaining human annotation tasks, etc.), and supplementary materials (e.g. final-cut content script, film editing related content segmentation, etc.) to support the annotation.

According to one embodiment, a method for generating a synopsis of a segment of an audiovisual content is proposed. The method comprises: receiving semantic metadata of the segment of audiovisual content; analysing the received semantic metadata to identify semantic concepts provided in the semantic metadata and relations among the semantic concepts, wherein each semantic concept is associated with one concept type and has properties and instances, and the semantic concepts and the relations among them describe a semantic description; and generating the synopsis of the segment of audiovisual content by transforming the semantic description into a syntactically correct synopsis. Particularly, the semantic concepts and the relations among them describe the semantic description according to an ontology-style semantic annotation scheme.

In one embodiment, the concept types of the semantic concepts are selected from a set of concept taxonomies at least consisting of persons, creatures, objects, locations, times, states, events, processes and activities, and wherein the relations among the semantic concepts include at least one of participant, property, state, locative and temporal relations.

In one embodiment, the properties of the semantic concepts include information on at least one of grammatical number and gender, type, associated determiners and prepositions, and narrative importance of the semantic concepts.

In one embodiment, the audiovisual content includes multiple segments, and a combined synopsis of the multiple segments is generated from a combined semantic description described by the combined semantic metadata of the multiple segments.

In one embodiment, the generation of the synopsis includes co-occurrence, redundancy and importance analysis on selection of the parts of the semantic description to be transformed into the synopsis and their representation within the synopsis.

In one embodiment, the synopsis is a textual synopsis or an audio synopsis.

According to one embodiment, an apparatus configured to generate a synopsis of a segment of an audiovisual content is introduced. The apparatus comprises a receiving unit and a operation unit. The receiving unit is configured to receive semantic metadata of the segment of audiovisual content. The operation unit is configured to analyse the received semantic metadata to identify semantic concepts provided in the semantic metadata and relations among the semantic concepts. Each semantic concept is associated with one concept type and has properties and instances. The semantic concepts and the relations among them describe a semantic description. The operation unit is further configured to generate the synopsis of the segment of the audiovisual content by transforming the semantic description into a syntactically correct synopsis.

With respect to the apparatus configured to generate a synopsis of a segment of an audiovisual content, there are same or similar aspects and advantages applicable, which have been mentioned with respect to the method according to the current principles. Merely to omit unnecessary explanations and repetitions, these are not mentioned here.

Also, a computer readable storage medium has stored therein instructions for generating a synopsis of a segment of an audiovisual content, which, when executed by a computer, cause the computer to: receive semantic metadata of the segment of audiovisual content; analyse the received semantic metadata to identify semantic concepts provided in the semantic metadata and relations among the semantic concepts, wherein each semantic concept is associated with one concept type and has properties and instances, and the semantic concepts and the relations among them describe a semantic description; and generate the synopsis of the segment of audiovisual content by transforming the semantic description into a syntactically correct synopsis.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

Similar to the apparatus, same or similar advantages, which have been mentioned with respect to the method, also applied to the computer readable storage medium in the same or similar way and therefore not repeated.

The described ontology-style semantic annotation scheme enables a sophisticated language production system to perform detailed co-occurrence and redundancy analysis, resulting in a more natural synopsis such as the complete textual synopsis of the embodiments described below. It is also possible that fan communities can provide annotations for popular content, probably relying on increased human participation.

Further characteristics of the present solution will become apparent from the description of the embodiments together with the claims and the included drawings. Embodiments can fulfill individual characteristics or a combination of several characteristics.

### BRIEF DESCRIPTION OF THE DRAWINGS

- Fig. 1: is a flow chart schematically illustrating one embodiment of a method for generating a synopsis of a segment of an audiovisual content according to the present principles.
- Fig. 2: graphically depicts an exemplary semantic description that shows the non-temporal relations of the semantic concepts, which is used in the embodiments of the method according to the present principles.
- Fig. 3: shows the temporal relations of the semantic concepts of the exemplary semantic description as shown in Fig. 2.
- Fig. 4: is a schematic diagram depicting one embodiment of an apparatus introduced in the present principles.

### DETAILED DESCRIPTION OF PREFERRED EMBODIMENTS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

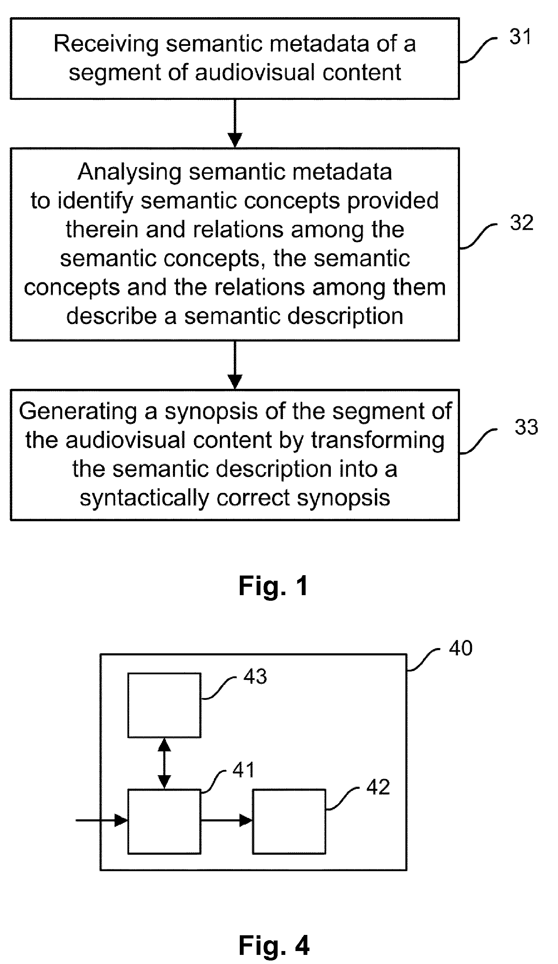

Fig. 1 shows one embodiment of the method for generating a synopsis of a segment of an audiovisual content. The method comprises receiving 31 semantic metadata of the segment of audiovisual (AV) content, and analysing 32 the received semantic metadata to identify semantic concepts provided in the semantic metadata and relations among the semantic concepts. Each semantic concept is associated with one concept type and has properties and instances. The semantic concepts and the relations among the semantic concepts describe a semantic description of the segment of the AV content. The method further comprises generating 33 the synopsis of the segment of audiovisual content by transforming the semantic description into a syntactically correct synopsis.

Preferably, the semantic concepts and the relations among them describe the semantic description of the segment of the AV content according to an ontology-style semantic annotation scheme, which will be explained in detail below and in the exemplary embodiment. Below and in the exemplary embodiments, the ontology-style semantic annotation scheme is built based on a MPEG-7 tool (MPEG-7) for semantic descriptions. It should be understood that other available semantic description tools or method can also be used to build the ontology-style semantic annotation scheme, depending on different demands and situations.

In the following the basic ideas and structures of MPEG-7 are introduced first, which by itself lacks some features. An ontology-style semantic annotation scheme is explained subsequently based on the MPEG-7 scheme. The ontology-style semantic annotation scheme is used here to generate more precise and expressive semantic descriptions of audiovisual contents. These semantic descriptions can be transformed into more detailed synopses of the audiovisual contents.

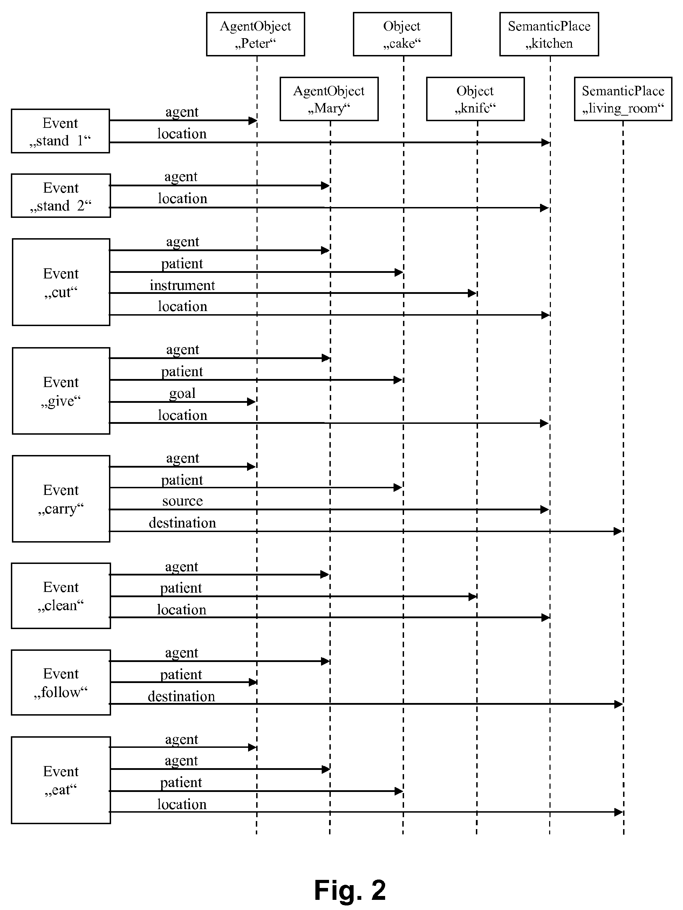

Fig. 2 shows a graphical depiction of an exemplary semantic description of an audiovisual content, which is described according to MPEG-7 tool. In this semantic description, some exemplary semantic concepts (e.g. events) and the non-temporal relations among the semantic concepts (e.g. events) are analysed and illustrated. The auxiliary doted lines in the figure are used as connection means of the relations to the non-event boxes, for clarity compared to lots of crossing standard connections.

MPEG-7 defines a small set of semantic concept classes (e.g., Object, AgentObject, Event, Concept, SemanticState/Place/Time, Semantic, etc.) with almost no hierarchy among them, except that AgentObject is a sub-class of Object and all others are sub-classes of an abstract semantic base type. Table 1 shows some exemplary semantic concept classes of MPEG-7 tools, which are used in the exemplary semantic description shown in Fig. 2. Each instance of a class can carry one or multiple labels describing or identifying the described entity, via textual descriptions or references to controlled terms defined by MPEG-7 tools, imported into MPEG-7 from external classification schemes, taxonomies, ontologies, or the like, or simply externally referenced from those. A class instance can carry an ID which unambiguously identifies this instance and is required for referencing and relating this instance. For example, several instances of cars in a semantic description may be described as instances of Object all having the label "car", but their IDs must differ (e.g., "car_1", "car_2", etc.) to enable distinction of the instances. The exemplary semantic description shown in Fig. 2 identifies class instances by IDs using such "_n" suffixes when necessary.

**Table 1: Example semantic concept classes of MPEG-7**

| **Class** | **Usage** |
|---|---|
| Object | Describes an object in a narrative world depicted by or related to the AV content |
| AgentObject | Describes an object that is a person, an organization, a group of people, or a personalized object in a narrative world |
| Event | Describes an event or activity in a narrative world |
| SemanticPlace | Describes a location in a narrative world |

Table 2 shows some exemplary relations of MPEG-7, which are used in the exemplary semantic description shown in Fig. 2. The relations and the corresponding inverse relations are both included because the latter are quite helpful to understand the descriptions. It is also helpful to add in mind a "has" before the noun-like relations and an "is" before the inverse relations ending with "Of" or "By". For example, A (has) *agent* B; A (is) *patientOf* B; and C (is) *metBy* D.

**Table 2: Example relations of MPEG-7**

| **Relation** | **Inverse relation** | **Description** |
|---|---|---|
| agent | agentOf | A *agent* B if any only if B intentionally performs or initiates A |
| patient | patientOf | A *patient* B if and only if B is affected by, undergoes, or is acted upon by A |
| instrument | instrumentOf | A *instrument* B if and only if B is used as implement to perform A |
| goal | goalOf | A *goal* B if and only if B is the end point of a transfer A |
| location | locationOf | A *location* B if and only if B is a location of A |
| source | sourceOf | A *source* B if and only if B is a source location of a motion A |
| destination | destinationOf | A *destination* B if and only if B is a destination location of a motion A |
| starts | startedBy | A *starts* B if and only if A and B start at the same time and A ends before B |
| strictContains | strictDuring | A *strictContains* B if and only if A starts before B and ends after B |
| precedes | follows | A *precedes* B if and only if A ends before B starts |
| meets | metBy | A *meets* B if and only if A ends exactly when B starts |
| coOccurs | coOccurs | A *coOccurs* B if and only if A and B start and end at the same time respectively |

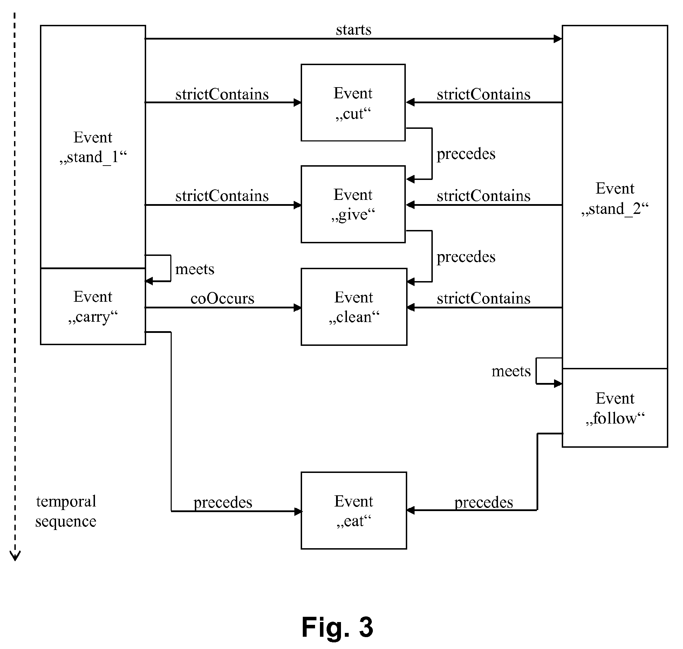

Fig. 3 shows the temporal relations of the semantic concepts (i.e. events) shown in Fig. 2. In Fig. 3, the top and bottom lines of the event boxes only indicate the temporal sequence of the start and end times of the events, not an actual time on a linear scale. That is, the height of the boxes does not indicate the actual duration of the events.

MPEG-7 actually does not explicitly define between which sets of classes its various relations are expected or permitted to be applied, and such specification is hard to be defined in MPEG-7 due to the lack of semantic sub-classing. For example, there is no machine-understandable definition that the MPEG-7 relation *member* can reasonably be applied between a group of entities and its members (e.g., "Beatles" *member* "Paul McCartney") but not between single entities (e.g., "Paul McCartney" *member* "John Lennon"), and these three entities are instances of AgentObject in MPEG-7 anyway. Moreover, MPEG-7 uses Extensible Markup Language (XML) for its descriptions and XML Schema for their definition, which is appropriate to define the syntax of the descriptions but less suitable to describe the related semantic meaning and constraints in a machine-understandable way. The latter are mainly described by the text portions of MPEG-7 instead.

In other words, MPEG-7 by itself lacks semantic description features that are typically needed for an expressive semantic description and a detailed synopsis. Therefore it is often required to rely on extensions of MPEG-7 or external classification schemes, or the like, to gather supplemental information that is needed to create a syntactically correct synopsis. One example is the lack of machine-understandable MPEG-7 description means for possessive (e.g., "Peter's car" or "Mary's house"), acquaintanceship (neighbor, colleague, friend, foe, etc.) and family (patent, spouse, sibling, etc.) relations. Inspiration on how to model these and further features can be derived from linguistics (thematic relations and theta roles, lexical structure analysis and representation, etc.), knowledge engineering (ontology engineering practices, existing upper-level and domain ontologies, etc.), and artificial intelligence (NLP, named entity recognition, automated translation, etc.), some of which are introduced below.

In contrast to pure MPEG-7, an ontology-style semantic annotation scheme uses more complex, hierarchical class taxonomies to express and evaluate similarities between classes. For example, a fork and a spoon can be sub-classes of object, household object and cutlery, while a car and a motorcycle can be sub-classes of object, vehicle and ground vehicle, while these four entities would simply be instances of Object in MPEG-7. The permitted application of the various relations among the sets of classes are defined and used by the ontology-style semantic annotation scheme for reasoning and potential consistency checking. In addition, the ontology-style semantic annotation scheme uses languages specifically tailored to explicit description of both syntax and semantics of machine-understandable conceptualizations of knowledge, for example, frame-based languages like F-Logic (Frame Logic) or description logic based languages like OWL (Web Ontology Language).

As explained above, the semantic description of a segment of a AV content that is described according to ontology-style semantic annotation scheme can clearly show the semantic concepts and the relations among them, disregarding potential film editing related segmentation of the content. Therefore, the exemplary semantic description shown in Fig. 2 is assumed to be related to a segment of AV content showing the described concepts, disregarding, e.g., shots focusing on the different actors and their activities or a potential scene transition between the kitchen and the living room. Of course, the method can also be related to several segments of AV content or even to segments from different AV content sources.

In the following the generation 33 of a synopsis of the segment of audiovisual content is explained in details. Particularly, the synopsis is generated 33 by transforming the semantic description of the segment of the audiovisual content into a syntactically correct synopsis. The synopsis can be optionally transformed into a preferred language, for example, English.

As a synopsis should naturally follow the temporal sequence of the segment of the AV content, it is checked first which concepts occur or happen first. Referring to Fig. 3, there are two "stand" events, which start at the same time as indicated by their *starts* relation. It must be determined that the Events "stand_1" and "stand_2" mean the verb "stand". In MPEG-7, these events may have a label "stand" with a term reference, and the referenced classification scheme or the like can provide this information. In an ontology-style semantic annotation scheme used in this embodiment, these events are identified and specified as instances of a class "verb event", "stative activity event" or the like, or have explicit indicators for verb-like events or activities. This event class instance analysis must be performed for all other Event instances of the semantic description of the segment of the AV content, which all represent verbs although their classification into stative or dynamic verbs may be different.

Referring to Fig. 2, the Event "stand_1" has an *agent* relation to the AgentObject "Peter". The default linguistic linking of an agent role to an active English clause is its subject. However, depending on the kind of clause to be constructed, more information about "Peter" may be needed for a correct syntax linking, for example, the grammatical number (e.g., singular or plural), gender (e.g., masculine, feminine, neuter, etc.), whether "Peter" is an individually named instance (proper noun, e.g., "Albert Einstein") or a generic instance of a class of entities (common noun, e.g., a "scientist"), and whether or not "Peter" is used with determiners (e.g., articles).

In MPEG-7, this knowledge can best be deduced from information provided for a label term reference by the referenced classification scheme or the like; it may sometimes also be implicitly deduced from contained MPEG-7 information. An ontology-style semantic annotation scheme may provide such knowledge via sub-classing and/or explicit indicators or properties. The knowledge may also be gathered from machine-understandable linguistic web resources (e.g. WordNet) if an instance is described unambiguously enough to enable such a lookup. For example, the determination of the correct verb form of "stand_1" in English simple present needs the grammatical number of "Peter" because a generic textual representation "stand(s)" is hardly acceptable. In MPEG-7, "Peter" may have a PersonType sub-element, describing more information about "Peter" (first/family name(s), address, etc.), indicating that a single person is meant. The knowledge may also be deduced from information provided for a referenced label term "Peter" indicating that a first name and hence a single person is meant. An ontology-style semantic annotation scheme may provide a class "person", "man", or the like, or may have an explicit grammatical number indication. The grammatical gender of the AgentObject "Peter" may be deduced from gender information associated with the first name label term "Peter", a "man" sub-classing, a web lookup of person names, or explicit indications. The MPEG-7 PersonType sub-element, the knowledge of "Peter" referring to a first name, or explicit indications may be used to determine that "Peter" is a proper person name to be written with a capital first letter and without an article. This analysis enables the method to transform the partial description Event "stand_1" *agent* AgentObject "Peter" into a textual representation like "Peter stands".

Referring to Fig. 2, the Event "stand_1" further has a *location* relation to the SemanticPlace "kitchen". Similar to the "Peter" above, "kitchen" is analyzed for its grammatical number and gender as well as for its noun type and associated determiners, deducing it to be a singular and neuter common noun to be used with an article, i.e. "a kitchen". However, the syntax linking needs to select a proper preposition to express the *location* relation of "stand_1" to "kitchen". For example, a generic textual representation "in the location of a kitchen" is hardly acceptable. A referenced label term, suitable sub-classing or a web lookup may identify "kitchen" to be a room, for which the implicit default prepositional linking is "in". Another example is that for islands it would be "on" islands instead. There can also be an explicit specification that "kitchen" belongs to a set of classes requiring "in" as preposition if used with *location,* via sub-classing, indicators, properties, etc. As a result, the textual representation of the Event "stand_1" with its participants and locations may be "Peter stands in a kitchen".

The analysis of the Event "stand_2" is similar to that of Event "stand_1", except for the grammatical gender of the AgentObject "Mary", which results in a textual representation like "Mary stands in a kitchen" if represented by itself. However, when both clauses are combined in the textual synopsis, all references to "kitchen" except the first one must use a definite article, e.g., "the", instead of an indefinite one, e.g., "a" or "an", to indicate that the same kitchen is meant. Equivalent phrases stressing this identity (e.g., "the same") can also be used if deemed necessary for the context. Furthermore, it is expressed that both "stand" events happen at the same time if not implicitly clear. Consequently, a combination of the two clauses may be "Peter stands in a kitchen. Mary stands in the same kitchen at the same time". This wording, although semantically and syntactically correct, sounds somewhat artificial. If the language production system takes into account that Peter and Mary perform the same kind of activity at the same place and at the same time, a more natural representation is "Peter and Mary stand in a kitchen", which needs the plural verb form of "stand" due to the compound subject but does not need an explicit "at the same time" because this is implied by the single verb.

The next event in temporal sequence is the Event "cut", which happens after the start of the "stand" events and completely during them as indicated by the *starts and strictContains* relations. It has the agent "Mary" and the location "kitchen", like "stand_2" above. In addition, the Event "cut" has a *patient* relation to the Object "cake". If an agent role is also specified, the default linguistic linking of a patient role to an active English clause is its object. The usual non-event class instance analysis determines that "cake" is a singular and neuter common noun to be used with an article, i.e. "a cake". Finally, "cut" has an *instrument* relation to the Object "knife". The default linguistic linking of an instrument role to an English clause is a prepositional phrase with "with", and "knife" is determined to be a singular and neuter common noun to be used with an article, i.e. "a knife". As a result, the separate textual representation of the Event "cut" with its participants and locations may be "Mary cuts a cake with a knife in a kitchen".

Within the synopsis, the location should be left out because it has already been specified and no change in location has occurred so far, and no specific temporal description is needed because the Events "stand_1"/"stand_2" and "cut" happen in temporal sequence as implied by a textual representation, leading to "Mary cuts a cake with a knife". If the language production system supports replacement of noun co-occurrences with pronouns, which is a feature for that a grammatical gender is needed, "Mary" can alternatively be replaced by "She".

The next event in temporal sequence is the Event "give", which happens after "cut" with some unspecified temporal gap. For example, Mary puts the knife aside without this being described. Like the Event "cut", this Event "give" has the agent "Mary", the patient "cake", and the location "kitchen". In addition, "give" has a *goal* relation to the *AgentObject* "Peter". The default linguistic linking of a goal role to an English clause is its indirect object, which can be expressed by a prepositional phrase with "to", so a separate textual representation of the Event "give" with its participants and locations may be "Mary gives a cake to Peter in a kitchen". Within the synopsis, "Mary" can easily be replaced by "She" as she is the subject of both clauses to be constructed for the Events "cut" and "give", but "cake" must not be replaced by "it" because it would be ambiguous whether "it" refers to "cake" or "knife". As "cake" appears the second time, it must be used with a definite article, i.e. "the cake". "Peter" might be replaced by "him", but this may be harder to understand as "Peter" last appeared in the more distant "stand" clause. Finally, the location is unchanged, and the temporal sequence of "cut" and "give" does not require specific textual representation. Consequently, the synopsis representation is, for example, "She gives the cake to Peter".

One of the next events in temporal sequence is the Event "carry", which starts exactly when the Event "stand_1" is finished and happens at exactly at the same time as the Event "clean". The "carry" event has the agent "Peter", the patient "cake" and a *source* relation to "kitchen". The default linguistic linking of a source role to an English clause is a prepositional phrase with "from". In addition, the event "carry" has a *destination* relation to the SemanticPlace "living_room". The default linguistic linking of a destination role to an English clause is a prepositional phrase with "to", and "living_room" is determined to be a singular and neuter common noun to be used with an article, i.e. "a living room". As a result, the separate textual representation of the Event "carry" with its participants and locations may be "Peter carries a cake from a kitchen to a living room". Within the synopsis, "Peter" and "cake" can easily be replaced by "He" and "it" respectively as they are the only nouns in the preceding "give" clause which match the respective pronoun.

If the "kitchen" source is included, which can be optionally left out because the position of "Peter" is still known to be in the kitchen, "kitchen" must be used with a definite article. If the temporal relation of "carry" to the finishing "stand_1" event should explicitly be expressed, a textual representation like "Peter stops standing (in a kitchen) and (immediately) carries a cake (from the kitchen) to a living room" can thus be used. In some cases, the language production system can analyze that a motion activity of an agent, like carrying an object to another room, implicitly finishes a "stand" activity of this agent, such as a human reader can probably judge the "stops standing and carries" phrase as sounding artificial and redundant. Therefore, the synopsis representation can be alternatively described as "He carries it from the kitchen to a living room".

The concurrent Event "clean" is associated with the agent "Mary", the patient "knife" and the location "kitchen", so its separate textual representation with its participants and locations can be "Mary cleans a knife in a kitchen". Within the synopsis, "Mary" could be replaced by "She", although she last appeared in the more distant "give" clause. "Knife" must be used within a definite article, and Mary's location as participating agent is still unchanged. To express the concurrency of the Events "carry" and "clean", their clauses can be linked via, for example, "while", "meanwhile", "in the meantime", or the like, using an independent and a sub-clause or two independent clauses as suitable for the linking phrase. Consequently, the synopsis representation of the concurrent events "clean" and "carry" can be described as "He carries it from the kitchen to a living room while Mary cleans the knife".

The next event in temporal sequence is the Event "follow", which happens after "carry" and "clean" and exactly starts when the Event "stand_2" finishes. The Event "follow" is associated with the agent "Mary", the patient "Peter" and the destination "living_room". Its separate textual representation with its participants and locations can thus be "Mary follows Peter to a living room". Within the synopsis, "Mary" and "Peter" can be easily replaced by "She" and "him" respectively, and "living_room" is used with a definite article. Similar to "stand_1" described above, the temporal relation of "follow" to the finishing of "stand_2" can explicitly be expressed, for example, "Mary stops standing (in a kitchen) and (immediately) follows Peter to a living room". Alternatively, it can be simply left out assuming that it is implied by "follow". To stress that "follow" does not happen together with the concurrent Events "carry" and "clean", the "follow" clause can be enhanced with a temporal phrase such as "after that", "(a bit) later", "subsequently", etc., which are not normally used to link subsequent clauses because it is the implied relation. As a result, the synopsis representation of this event can be like "After that, she follows him to the living room".

The next and last event in the temporal sequence is the Event "eat". This event has two *agent* relations, to "Peter" and "Mary" respectively. This expresses that the same activity is performed by several agents together, jointly, or with each other. In contrast, the two "stand" activities are described as separate events because of their different agents and durations. The "eat" event further has the patient "cake" and the location "living_room", so its separate textual representation with its participants and locations is "Peter and Mary jointly eat a cake in a living room". Within the synopsis, "Peter" and "Mary" should not be replaced by "He" and "she" respectively because phrasing of compound subjects with individual pronouns is rather unusual, but "Peter and Mary" as compound subject may be replaced by "they" as the two are the only agent-like instances mentioned in the preceding "follow" clause. Furthermore, "cake" is used with a definite article, and the location is left out as already known to be the unchanged location of the participating agents. All these steps result in an exemplary synopsis representation like "They jointly eat the cake".

The complete textual synopsis of a segment of AV content described by the exemplary semantic description as shown in Figs. 2 and 3 can thus be described as, for example, "Peter and Mary stand in a kitchen. Mary cuts a cake with a knife. She gives the cake to Peter. He carries it from the kitchen to a living room while Mary cleans the knife. After that, she follows him to the living room. They jointly eat the cake". Of course, the resulting synopsis can also be different from the above example, depending on different demands and settings.

In one embodiment, the above described method of generating a synopsis of a segment of audiovisual content from associated semantic metadata annotations provided according to an ontology-style semantic annotation scheme is applied to the field of video summarization and to be used for generation of a textual description or text synopsis of a video. This is done by using semantic annotations provided for the content of a video to create the textual descriptions, resulting in better quality of the description if the annotations are of high quality as discussed above. The application can use the linking of the annotations to segments of the content as guideline or at least hint for its segmentation for the summary.

In the case when the annotations are only provided on film editing level, the application typically needs to follow this segmentation to match the descriptions with the key frames of the segments. In the case where the annotations are provided with precise temporal mapping, the summary segmentation can be chosen more flexibly to address special intents of the summary, and the descriptions can be created from the temporally matching annotations. If the descriptions can or should not include all information from the annotations, e.g., to keep them short for quick reception or because of presentation space restrictions, the application can use the importance indication of the annotation and/or implicit selection rules specific to the intent of the content.

In another embodiment, the above described method of generating a synopsis of a segment of audiovisual content from associated semantic metadata annotations provided according to an ontology-style semantic annotation scheme is applied to audio description and to be used for generation of a synthetic audio synopsis, which is a synthesized spoken audio representation of the synopsis of the segment of audiovisual content. To create a synthetic audio description, the audio synopsis is presented in synchronization with the content and is mixed with the main audio part of the content with as little overlap as possible. Therefore, the semantic description must be provided with precise temporal mapping to the content, in order to enable placement of the audio synopsis of a specific part of a description as close to the occurrence of the described concepts as possible.

In addition, the semantic descriptions can be optionally filtered so that their most important parts are included in the audio synopsis but the synopsis is still temporally aligned with the gaps in the main audio parts. Such filtering can be performed using the importance indications in the descriptions, implicit selection rules specific to the intent of the content, and relevance policies specific to audio description.

Although the quality of such synthetic audio descriptions might be lower than that of professionally produced ones, in terms of information selection, diversity of language, quality and vividness of speech, etc., the former are much cheaper to create than the latter. Therefore, content creators can well choose to provide synthetic audio descriptions with their content to make it more accessible to visually impaired consumers even if producing professional ones is judged as too expensive. In addition, in the case when the described method of generating a synopsis of a segment of audiovisual content from associated semantic metadata annotations provided according to an ontology-style semantic annotation scheme is used in a consumer device and can be easily operated by a user, it becomes more convenient and practical for an end user to create and use synthetic audio descriptions for content originally not providing audio description.

Moreover, the described ontology-style semantic annotation scheme and methods can also be used for any other application for which a synopsis of segments of AV content is helpful. For example, the scheme and methods can be used in combination with techniques to process the audio part of the content (speech-to-text, speaker and sound detection, etc.), to create a rough transcript of a content (e.g., in content script style or in a more novel-like running text style) for which a regular script or an alternative text representation is not or no longer available. Such a transcript can also be represented as synthesized spoken audio representation to visually impaired users if this more detailed form is preferred over a synthetic audio description or a proper audio description of the content is not possible.

Referring to Fig. 4, one exemplary embodiment of an apparatus 40 configured to generate a synopsis of a segment of an audiovisual content is illustrated. The apparatus comprises a receiving unit 41 and an operation unit 42. The receiving unit 41 is configured to receive semantic metadata of the segment of audiovisual content. The operation unit 42 is configured to analyse the received semantic metadata to identify semantic concepts provided in the semantic metadata and relations among the semantic concepts. Each semantic concept is associated with one concept type and has properties and instances. The semantic concepts and the relations among them describe a semantic description. The operation unit 42 is further configured to generate the synopsis of the segment of the audiovisual content by transforming the semantic description into a syntactically correct synopsis. Optionally, the apparatus 40 further comprises a storage unit 43 configured to store the received semantic metadata of the segment of audiovisual content.

In one embodiment, the semantic concepts and the relations among them describe the semantic description according to an ontology-style semantic annotation scheme. The synopsis can be, for example, a textual synopsis or an audio synopsis.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

## Claims

1. A method for generating a synopsis of a segment of an audiovisual content, the method comprising:
receiving (31) semantic metadata of the segment of audiovisual content;
analysing (32) the received semantic metadata to identify semantic concepts provided in the semantic metadata and relations among the semantic concepts, wherein each semantic concept is associated with one concept type and has properties and instances, and the semantic concepts and the relations among them describe a semantic description; and
generating (33) the synopsis of the segment of audiovisual content by transforming the semantic description into a syntactically correct synopsis.

2. The method of claim 1, wherein the semantic concepts and the relations among them describe the semantic description according to an ontology-style semantic annotation scheme.

3. The method of claim 1 or 2, wherein the concept types of the semantic concepts are selected from a set of concept taxonomies at least consisting of persons, creatures, objects, locations, times, states, events, processes and activities, and wherein the relations among the semantic concepts include at least one of participant, property, state, locative and temporal relations.

4. The method of one of the preceding claims, wherein the properties of the semantic concepts include information on at least one of grammatical number and gender, type, associated determiners and prepositions, and narrative importance of the semantic concepts.

5. The method of one of the preceding claims, wherein the audiovisual content includes multiple segments, and a combined synopsis of the multiple segments is generated from a combined semantic description described by the combined semantic metadata of the multiple segments.

6. The method of one of the preceding claims, wherein the synopsis is a textual synopsis or an audio synopsis.

7. The method of one of the preceding claims, wherein the generation of the synopsis includes co-occurrence, redundancy and importance analysis on selection of the parts of the semantic description to be transformed into the synopsis and their representation within the synopsis.

8. An apparatus (40) configured to generate a synopsis of a segment of an audiovisual content, the apparatus comprising:
a receiving unit (41) configured to receive semantic metadata of the segment of audiovisual content; and
an operation unit (42) configured to
analyse the received semantic metadata to identify semantic concepts provided in the semantic metadata and relations among the semantic concepts, wherein each semantic concept is associated with one concept type and has properties and instances, and the semantic concepts and the relations among them describe a semantic description, and
generate the synopsis of the segment of the audiovisual content by transforming the semantic description into a syntactically correct synopsis.

9. The apparatus of claim 8, wherein the semantic concepts and the relations among them describe the semantic description according to an ontology-style semantic annotation scheme.

10. The apparatus of claim 8 or 9, wherein the concept types of the semantic concepts are selected from a set of concept taxonomies at least consisting of persons, creatures, objects, locations, times, states, events, processes and activities, and wherein the relations among the semantic concepts include at least one of participant, property, state, locative and temporal relations.

11. The apparatus of one of claims 8 to 10, wherein the properties of the semantic concepts include information on at least one of grammatical number and gender, type, associated determiners and prepositions, and narrative importance of the semantic concepts.

12. The apparatus of one of claims 8 to 11, wherein the audiovisual content includes multiple segments, and the operation unit (42) generates a combined synopsis of the multiple segments from a combined semantic description described by the combined semantic metadata of the multiple segments.

13. The apparatus of one of claims 8 to 12, wherein the synopsis is a textual synopsis or an audio synopsis.

14. The apparatus of one of claims 8 to 13, further comprising a storage unit (43) configured to store the received semantic metadata of the segment of audiovisual content.

15. A computer readable storage medium having stored therein instructions for generating a synopsis of a segment of an audiovisual content, which when executed by a computer, cause the computer to:
receive semantic metadata of the segment of audiovisual content;
analyse the received semantic metadata to identify semantic concepts provided in the semantic metadata and relations among the semantic concepts, wherein each semantic concept is associated with one concept type and has properties and instances, and the semantic concepts and the relations among them describe a semantic description; and
generate the synopsis of the segment of audiovisual content by transforming the semantic description into a syntactically correct synopsis.
